# EUROPEAN PATENT SPECIFICATION

(11) **EP 3 860 201 B1**
(45) Date of publication and mention of the grant of the patent: **25.02.2026**
(21) Application number: 19867172.9
(22) Date of filing: 22.08.2019
(51) Int. Cl.: H04W 24/10, H04L 5/00, H04W 52/36, H04W 52/34, H04W 74/0833

(54) **POWER HEADROOM REPORTING METHOD AND TERMINAL DEVICE**
VERFAHREN ZUR MELDUNG VON LEISTUNGSRESERVEN UND ENDGERÄTEVORRICHTUNG
PROCÉDÉ DE COMMUNICATION DE RAPPORT DE MARGE DE PUISSANCE, ET DISPOSITIF TERMINAL

(30) Priority: 28.09.2018 CN 201811142455
(43) Date of publication of application: 04.08.2021
(73) Proprietor: VIVO MOBILE COMMUNICATION CO., LTD., Dongguan, Guangdong 523860 (CN)
(72) Inventor: SUN, Xiaodong, Dongguan, Guangdong 523860 (CN); SUN, Peng, Dongguan, Guangdong 523860 (CN); WU, Yumin, Dongguan, Guangdong 523860 (CN)
(74) Representative: Conti, Marco
(86) International application number: PCT/CN2019/101973
(87) International publication number: WO 2020/063210

(56) References cited:
- EP-A1- 2 521 404
- WO-A1-2017/051904
- CN-A- 102 083 129
- CN-A- 102 104 905
- CN-A- 102 595 477
- US-A1- 2011 310 760
- US-A1- 2013 188 570
- US-A1- 2017 013 565
- "3rd Generation Partnership Project; Technical Specification Group Radio Access Network; NR; Physical layer procedures for control (Release 15)", 25 September 2018 (2018-09-25), XP051515403, Retrieved from the Internet <URL:http://www.3gpp.org/ftp/tsg%5Fran/WG1%5FRL1/DRAFT/Draft%5Fversions/Draft38213%2Df30%2Ezip> [retrieved on 20180925]

## Description

### TECHNICAL FIELD

The present disclosure relates to the field of communications technologies, and in particular, to a power headroom reporting method and a terminal device.

### BACKGROUND

A future communications system (for example, a new radio (New Radio, NR) system) supports carrier aggregation (Carrier Aggregation, CA), dual connection (Dual Connection, DC), supplement uplink (Supplement Uplink, SUL), carrier switching sending, and the like. In these scenarios, user equipment (User Equipment, UE) may simultaneously send an uplink physical channel or a reference signal on a plurality of carriers.

A power headroom report (Power Headroom Report, PHR) is mainly used for assist in network side scheduling. Based on different channel types, an uplink support a type 1 PHR and a type 3 PHR, where the type 1 PHR is used to calculate a power headroom based on a physical uplink shared channel (Physical Uplink Sharing Channel, PUSCH), and the type 3 PHR is used to calculate a power headroom based on a sounding reference signal (Sounding Reference Signal, SRS). Based on whether the uplink physical channel or the reference signal is actually transmitted, the uplink supports a virtual PHR and a real PHR, where the virtual PHR corresponds to a case that the uplink physical channel or the reference signal is not transmitted, and the real PHR corresponds to a case that the uplink physical channel or the reference signal is actually transmitted.

However, in the related art, when the UE triggers power headroom reporting, there is no related solution for determining a related parameter for power headroom reporting such as a carrier used for power headroom calculation and a power headroom reporting type. Consequently, power headroom reporting may be inaccurate, thereby affecting a network side scheduling decision. US2011310760A1 discloses a method for providing power headroom reporting in a telecommunication system. US2013188570A1 discloses a method for reporting power headroom in a carrier aggregation context. EP2521404A1 discloses a method for reporting a power headroom report (PHR) in a carrier aggregation scenario. "3rd Generation Partnership Project; Technical Specification Group Radio Access Network; NR; Physical layer procedures for control (Release 15)" specifies and establishes the characteristics of the physical layer procedures for control operation in 5G-NR.

### SUMMARY

The invention is set out in the appended set of claims. Some embodiments of the present disclosure provide a power headroom reporting method and a terminal device, to resolve a problem in the related art that power headroom reporting is inaccurate because a related parameter for power headroom reporting cannot be determined clearly.

To resolve the foregoing technical problem, the present disclosure is implemented as follows:

According to a first aspect, some embodiments of the present disclosure provide a power headroom reporting method. The method includes:
performing power headroom reporting according to a power headroom report PHR policy, where
the PHR policy is related to at least one of the following: a carrier used for power headroom calculation, or a target PHR type, the target PHR type includes a first PHR type and/or a second PHR type, the first PHR type includes a type 1 PHR, a type 2 PHR, or a type 3 PHR, and the second PHR type includes a real PHR or a virtual PHR. The PHR policy comprises: determining a first carrier used for power headroom calculation, wherein the first carrier belongs to at least two carriers that carry a first uplink transmission of the terminal device, the first carrier is a carrier that has a highest priority in the at least two carriers and that is determined based on a carrier priority relationship, and the first uplink transmission comprises transmission of an uplink physical channel or a reference signal; and/or, wherein the PHR policy comprises: determining the target PHR type based on an uplink transmission between a first moment and a second moment, wherein the first moment is a moment at which the terminal device triggers power headroom reporting, and the second moment is a moment before power headroom reporting and after the first moment, or a moment of power headroom reporting.

According to a second aspect, some embodiments of the present disclosure further provide a terminal device. The terminal device includes:
a reporting module, configured to perform power headroom reporting according to a power headroom report PHR policy, where
the PHR policy is related to at least one of the following: a carrier used for power headroom calculation, or a target PHR type, the target PHR type includes a first PHR type and/or a second PHR type, the first PHR type includes a type 1 PHR, a type 2 PHR, or a type 3 PHR, and the second PHR type includes a real PHR or a virtual PHR. The PHR policy comprises: determining a first carrier used for power headroom calculation, wherein the first carrier belongs to at least two carriers that carry a first uplink transmission of the terminal device, the first carrier is a carrier that has a highest priority in the at least two carriers and that is determined based on a carrier priority relationship, and the first uplink transmission comprises transmission of an uplink physical channel or a reference signal; and/or, wherein the PHR policy comprises: determining the target PHR type based on an uplink transmission between a first moment and a second moment, wherein the first moment is a moment at which the terminal device triggers power headroom reporting, and the second moment is a moment before power headroom reporting and after the first moment, or a moment of power headroom reporting.

According to a third aspect, some embodiments of the present disclosure further provide a terminal device, including a processor, a memory, and a computer program that is stored in the memory and that can run on the processor, where when the computer program is executed by the processor, steps of the foregoing power headroom reporting method are implemented.

According to a fourth aspect, some embodiments of the present disclosure further provide a computer readable storage medium, where the computer readable storage medium stores a computer program, and when the computer program is executed by a processor, steps of the foregoing power headroom reporting method are implemented.

In some embodiments of the present disclosure, when the terminal device triggers power headroom reporting, the power headroom reporting policy may be used to determine the carrier used for power headroom calculation and/or the target PHR type, and power headroom reporting is performed, so that a manner of determining a related parameter for power headroom calculation is specified, thereby improving accuracy of power headroom reporting.

### BRIEF DESCRIPTION OF DRAWINGS

To describe the technical solutions in some embodiments of the present disclosure more clearly, the following briefly describes the accompanying drawings required for describing some embodiments of the present disclosures. Apparently, the accompanying drawings in the following description show merely some embodiments of the present disclosure, and a person of ordinary skill in the art may still derive other drawings from these accompanying drawings without creative efforts.
FIG. 1 is a structural diagram of a network system applicable to some embodiments of the present disclosure;
FIG. 2 is a flowchart of a power headroom reporting method according to some embodiments of the present disclosure;
FIG. 3 is a structural diagram of a terminal device according to some embodiments of the present disclosure; and
FIG. 4 is a structural diagram of a terminal device according to still another embodiment of the present disclosure.

### DESCRIPTION OF EMBODIMENTS

The following clearly and completely describes the technical solutions in some embodiments of the present disclosure with reference to the accompanying drawings in some embodiments of the present disclosure. Apparently, the described embodiments are merely some but not all of the embodiments of the present disclosure. All other embodiments obtained by a person of ordinary skill in the art based on the embodiments of the present disclosure without creative efforts shall fall within the protection scope of the present disclosure.

Terms "first,", "second", etc. in the Description and Claims of the present application are used to distinguish similar objects, instead of describing a specific sequence or order. It should be understood that data used in this way may be interchangeable in appropriate cases, so that the embodiments of this application described herein are implemented in a sequence other than those shown or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device. In addition, in the specification and claims, "and/or" is used to indicate at least one of connected objects, for example, A and/or B and/or C indicates seven cases: only A, only B, only C, both A and B, both B and C, both A and C, and A, B and C.

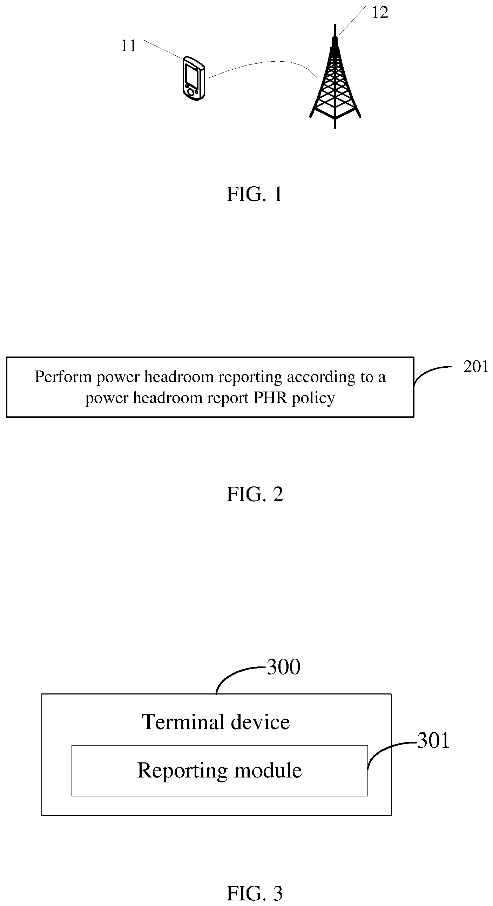

Some embodiments of the present disclosure provide a power headroom reporting method. Referring to FIG. 1, FIG. 1 is a structural diagram of a network system applicable to some embodiments of the present disclosure. As shown in FIG. 1, the network system includes a terminal device 11 and a network side device 12. The terminal device 11 may be a terminal device side device such as a mobile phone, a tablet personal computer (Tablet Personal Computer), a laptop computer (Laptop Computer), a personal digital assistant (Personal Digital Assistant, PDA), a mobile internet device (Mobile Internet Device, MID), or a wearable device (Wearable Device). It should be noted that a specific type of the terminal device 11 is not limited in some embodiments of the present disclosure. The network side device 12 may be a base station, for example, a macro base station, an LTE eNB, a 5G NR NB, or a gNB. The network side device 12 may be alternatively a small cell, for example, a low power node (Low Power Node, LPN) pico or a femto, or the network side device 12 may be an access point (Access Point, AP). The base station may be alternatively a network node formed by a central unit (Central Unit, CU) and a plurality of transmission reception points (Transmission Reception Point, TRP) that are managed and controlled by the CU. It should be noted that a specific type of the network side device 12 is not limited in some embodiments of the present disclosure.

In some embodiments of the present disclosure, the terminal device 11 may perform power headroom reporting by using a power headroom report (Power Headroom Report, PHR) policy in a case of triggering power headroom reporting. The PHR policy is related to at least one of a carrier used for power headroom calculation, and a target PHR type, the target PHR type may include a first PHR type and/or a second PHR type, the first PHR type may include a type 1 PHR, a type 2 PHR, or a type 3 PHR, and the second PHR type may include a real PHR or a virtual PHR.

Specifically, the terminal device 11 may determine, according to the foregoing PHR policy, the carrier used for power headroom calculation and/or the target PHR type, so that a power headroom can be calculated and reported based on the carrier used for power headroom calculation and/or the target PHR type. In some embodiments of the present disclosure, a related parameter for power headroom calculation is determined according to the PHR policy, and a manner of determining the related parameter for power headroom calculation is specified, so that accuracy of power headroom calculation can be improved, thereby improving accuracy of power headroom reporting.

For example, when the foregoing PHR policy includes: determining that a carrier with a highest priority in at least two carriers that carry a first uplink transmission of the terminal device is the carrier used for power headroom calculation, the terminal device 11 may select, as the carrier used for power headroom calculation, the carrier with the highest priority in the at least two carriers that carry the first uplink transmission of the terminal device 11. When the foregoing PHR policy includes: determining the first PHR type based on an uplink transmission between a first moment and a second moment, the terminal device 11 may determine, based on the uplink transmission between the first moment and the second moment, an uplink channel or a reference signal used for power headroom calculation, that is, the first PHR type, where the first moment is a moment at which the terminal device triggers power headroom reporting, and the second moment is a moment before power headroom reporting and after the first moment.

It should be noted that the foregoing PHR policy may be predefined in a protocol, or may be configured on a network side. This is not limited in some embodiments of the present disclosure.

Correspondingly, the network side device 12 may receive a power headroom reported by the terminal device 11, and perform a scheduling decision based on the power headroom reported by the terminal device 11.

In some embodiments of the present disclosure, power headroom reporting is performed by using a PHR policy, where the PHR policy is related to at least one of the following: a carrier used for power headroom calculation, or a target PHR type. When the terminal device triggers power headroom reporting, the power headroom reporting policy may be used to determine the carrier used for power headroom calculation and/or the target PHR type, and power headroom reporting is performed based on the determined carrier used for power headroom calculation and/or target PHR type, so that accuracy of power headroom calculation can be improved, thereby improving accuracy of power headroom reporting.

Some embodiments of the present disclosure provide a power headroom reporting method, applied to a terminal device. Referring to FIG. 2, FIG. 2 is a flowchart of a power headroom reporting method according to some embodiments of the present disclosure. As shown in FIG. 2, the method includes the following steps.

Step 201: Perform power headroom reporting according to a power headroom report PHR policy.

The PHR policy is related to at least one of the following: a carrier used for power headroom calculation, or a target PHR type, the target PHR type includes a first PHR type and/or a second PHR type, the first PHR type includes a type 1 PHR, a type 2 PHR, or a type 3 PHR, and the second PHR type includes a real PHR or a virtual PHR.

In some embodiments of the present disclosure, in a case of triggering power headroom reporting, the terminal device may determine, according to the foregoing PHR policy, the carrier used for power headroom calculation and/or the target PHR type, so that a power headroom can be calculated and reported based on the carrier used for power headroom calculation and/or the target PHR type.

It should be noted that, the type 1 PHR is calculating a power headroom based on a physical uplink sharing channel (Physical Uplink Sharing Channel, PUSCH), the type 2 PHR is calculating a power headroom based on a physical uplink control channel (Physical Uplink Control Channel, PUCCH), and the type 3 PHR is calculating a power headroom based on a sounding reference signal (Sounding Reference Signal, SRS). The virtual PHR corresponds to a case that an uplink physical channel or a reference signal is not transmitted, and the real PHR corresponds to a case that an uplink physical channel or a reference signal is actually transmitted.

It should be noted that the foregoing PHR policy may be predefined in a protocol, or may be configured on a network side. This is not limited in some embodiments of the present disclosure.

According to the power headroom reporting method provided in some embodiments of the present disclosure, power headroom reporting is performed according to a power headroom report PHR policy, where the PHR policy is related to at least one of the following: a carrier used for power headroom calculation, or a target PHR type, the target PHR type includes a first PHR type and/or a second PHR type, the first PHR type includes a type 1 PHR, a type 2 PHR, or a type 3 PHR, and the second PHR type includes a real PHR or a virtual PHR. When the terminal device triggers power headroom reporting, the power headroom reporting policy may be used to determine the carrier used for power headroom calculation and/or the target PHR type, and power headroom reporting is performed, so that a manner of determining a related parameter for power headroom calculation is specified, thereby improving accuracy of power headroom reporting.

Optionally, the PHR policy may include:
determining a first carrier used for power headroom calculation, where
the first carrier belongs to at least two carriers that carry a first uplink transmission of the terminal device, the first carrier is a carrier that has a highest priority in the at least two carriers and that is determined based on a carrier priority relationship, and the first uplink transmission includes transmission of an uplink physical channel or a reference signal.

In some embodiments of the present disclosure, the PHR policy includes: determining, based on the carrier priority relationship, that the carrier with the highest priority in the at least two carriers that carry the first uplink transmission of the terminal device is the carrier used for power headroom calculation.

It should be noted that the foregoing carrier priority relationship may be predefined in a protocol, or may be configured on a network side. This is not limited in some embodiments of the present disclosure.

For example, when a priority of a carrier that carries a PUCCH is higher than a priority of a carrier that does not carry a PUCCH, in a supplement uplink (Supplement Uplink, SUL) scenario, when user equipment (User Equipment, UE) triggers PHR, a PUCCH transmission exists on an SUL carrier, and only PUSCH transmission exists on a non-SUL (non-supplement uplink) carrier, only PHR on the SUL carrier is reported based on an uplink transmission channel priority, that is, a power headroom is calculated and reported based on the SUL carrier.

In some embodiments of the present disclosure, a power headroom is calculated based on the carrier with the highest priority in the at least two carriers of the first uplink transmission of the terminal device, so that accuracy of power headroom calculation can be improved, thereby improving accuracy of power headroom reporting.

Optionally, the carrier priority relationship may include at least one of the following:
a priority of a target carrier is higher than a priority of a source carrier;
a priority of a primary carrier is higher than a priority of a primary-secondary carrier, and the priority of the primary-secondary carrier is higher than a priority of a secondary carrier;
a priority of a carrier that carries a physical random access channel (Physical Random Access Channel, PRACH) is higher than a priority of a carrier that does not carry a PRACH;
a priority of a carrier that carries a physical uplink control channel PUCCH is higher than a priority of a carrier that does not carry a PUCCH;
a priority of a carrier that carries an aperiodic sounding reference signal SRS is higher than a priority of a carrier that carries a physical uplink shared channel PUSCH, and the priority of the carrier that carries the PUSCH is higher than a priority of a carrier that carries a periodic or semi-persistent SRS; and
a priority of a carrier scrambled by a physical uplink shared channel PUSCH by using a first-type radio network temporary identifier (Radio Network Temporary Identifier, RNTI) is higher than a carrier scrambled by the PUSCH by using a second-type RNTI, where the first-type RNTI is a modulation and coding scheme-cell radio network temporary identifier (Modulation and Coding Scheme-Cell Radio Network Temporary Identifier, MCS-C-RNTI), and the second-type RNTI is an RNTI other than the MCS-C-RNTI.

In some embodiments of the present disclosure, the first-type radio network temporary identifier (Radio Network Temporary Identifier, RNTI) is a modulation and coding scheme-cell radio network temporary identifier (Modulation and Coding Scheme-Cell Radio Network Temporary Identifier, MCS-C-RNTI), and the second-type RNTI is an RNTI other than the MCS-C-RNTI.

For example, when the UE triggers power headroom reporting and sends an uplink physical channel or a reference signal on a target carrier and a source carrier, the UE may select the target carrier as the carrier used for power headroom calculation. When the UE triggers power headroom reporting, a PUCCH transmission exists on the SUL carrier, and only PUSCH transmission exists on the non-SUL carrier, the UE may select the SUL carrier as the carrier used for power headroom calculation.

It should be noted that, when there are different priority relationships if the at least two carriers that carries the terminal device are compared in different dimensions, any one of the different priority relationships may be selected to determine the carrier used for power headroom calculation, or priorities between the different priority relationships may be set to determine, based on a priority relationship with a highest priority, the carrier used for power headroom calculation.

For example, there is an aperiodic SRS transmission on the source carrier and a PUSCH transmission on the target carrier. If a priority of the target carrier is higher than a priority of the source carrier, the UE needs to select the target carrier as the carrier used for power headroom calculation. If a priority of a carrier that carries an aperiodic SRS is higher than a priority of a carrier that carries a PUSCH, the UE needs to select the source carrier as the carrier used for power headroom calculation.

Therefore, the priorities between the different priority relationships may be preset in some embodiments of the present disclosure. For example, a priority of a first priority relationship is higher than a priority of a second priority relationship, where the first priority relationship is that the priority of the target carrier higher than the priority of the source carrier, and the second priority relationship is that the priority of the carrier that carries the aperiodic SRS is higher than the priority of the carrier that carries the PUSCH, so that the carrier used for power headroom calculation is determined based on the first priority relationship, that is, the target carrier is determined as the carrier used for power headroom calculation.

In some embodiments of the present disclosure, the carrier used for power headroom calculation is determined based on the carrier priority relationship, so that accuracy of power headroom calculation can be improved, thereby improving accuracy of power headroom reporting.

Optionally, the PHR policy may include:
determining the target PHR type based on an uplink transmission between a first moment and a second moment, where
the first moment is a moment at which the terminal device triggers power headroom reporting, and the second moment is a moment before power headroom reporting and after the first moment, or a moment of power headroom reporting.

In some embodiments of the present disclosure, the first moment is a moment at which the terminal device triggers power headroom reporting, and the second moment may be a moment before power headroom reporting and after the first moment. For example, the second moment may be a receiving moment of first new downlink control information (Downlink Control Information, DCI) after the first moment, or may be T1+Δt, where T1 is the first moment, Δt is preset duration, and a value of Δt may be properly set based on an actual situation. The second moment may be alternatively a moment of power headroom reporting.

Optionally, the second moment is a receiving moment of first new downlink control information DCI after the first moment; or
the second moment is a Media Access Control MAC protocol data unit PDU packetizing moment after the receiving moment of the first new downlink control information DCI.

In some embodiments of the present disclosure, the second moment may be a receiving moment of the first new DCI, or may be a Media Access Control, MAC (Media Access Control, MAC) protocol data unit (Protocol Data Unit, PDU) packetizing moment after the receiving moment of the first new DCI. Therefore, a determined PHR type can be more accurate, thereby improving accuracy of power headroom calculation.

It should be noted that the foregoing uplink transmission may include but is not limited to one or at least two of a PUSCH transmission, a PUCCH transmission, an SRS transmission, and the like.

In some embodiments of the present disclosure, the target PHR type is determined based on the uplink transmission between the first moment and the second moment, so that a PHR type (for example, an uplink channel or a reference signal, and/or a virtual PHR or a real PHR) used for power headroom calculation can be determined more accurately, thereby improving accuracy of power headroom calculation.

Optionally, the PHR policy includes:
determining the target PHR type based on a second uplink transmission, where
the second uplink transmission is the latest uplink transmission from the second moment in the uplink transmission between the first moment and the second moment.

In some embodiments of the present disclosure, the target PHR type is determined based on the latest uplink transmission from the second moment, so that a PHR type (for example, an uplink channel or a reference signal, and/or a virtual PHR or a real PHR) used for power headroom calculation can be determined more accurately, thereby improving accuracy of power headroom calculation.

Optionally, the target PHR type includes the first PHR type; and
the PHR policy may include any one of the following:
when at least one PUSCH transmission exists between the first moment and the second moment, determining that the first PHR type is the type 1 PHR;
when at least one PUCCH transmission exists between the first moment and the second moment, determining that the first PHR type is the type 2 PHR;
when at least one SRS transmission exists between the first moment and the second moment, determining that the first PHR type is the type 3 PHR;
when only PUCCH transmission exists in the uplink transmission between the first moment and the second moment, determining that the first PHR type is the type 1 PHR or the type 3 PHR; and
when the latest uplink transmission from the second moment is a PUCCH transmission in the uplink transmission between the first moment and the second moment, determining that the first PHR type is the type 1 PHR or the type 3 PHR.

In some embodiments of the present disclosure, the first PHR type is determined as the type 1 PHR, that is, the type 1 PHR is used to calculate a power headroom, for example, the power headroom is calculated based on a PUSCH. The first PHR type is determined as the type 2 PHR, that is, the type 2 PHR is used to calculate a power headroom, for example, the power headroom is calculated based on a PUCCH. The first PHR type is determined as the type 3 PHR, that is, the type 3 PHR is used to calculate a power headroom, for example, the power headroom is calculated based on an SRS.

Optionally, when different channel or reference signal transmissions exist between the first moment and the second moment, the first PHR type may be determined based on the latest uplink transmission from a moment T2. For example, when at least one PUSCH transmission and at least one SRS transmission exist between the first moment and the second moment, if the latest uplink transmission from the moment T2 is a PUSCH, it is determined that the first PHR type is the type 1 PHR.

Optionally, the PHR policy may include at least one of the following:
when the latest uplink transmission from the second moment is a PUSCH transmission in the uplink transmission between the first moment and the second moment, determining that the first PHR type is the type 1 PHR;
when the latest uplink transmission from the second moment is a PUCCH transmission in the uplink transmission between the first moment and the second moment, determining that the first PHR type is the type 2 PHR; and
when the latest uplink transmission from the second moment is an SRS transmission in the uplink transmission between the first moment and the second moment, determining that the first PHR type is the type 3 PHR.

In some embodiments of the present disclosure, the first PHR type is determined based on the latest uplink transmission from the second moment, and a power headroom is calculated based on the determined first PHR type, thereby improving accuracy of power headroom calculation.

Optionally, the target PHR type includes the second PHR type; and
the PHR policy may include any one of the following:
when at least one PUSCH or PUCCH or SRS transmission exists in a first time interval, determining that the second PHR type is the real PHR; otherwise, determining that the second PHR type is the virtual PHR;
when only PUCCH transmission exists in the first time interval, determining that the second PHR type is the virtual PHR; and
when the latest uplink transmission from the second moment is a PUCCH transmission in the uplink transmission between the first moment and the second moment, determining that the second PHR type is the virtual PHR, where
the first time interval is [T1, T2], T1 is the first moment, and T2 is the second moment.

In some embodiments of the present disclosure, it is determined that the second PHR type is the real PHR, that is, the real PHR is used to calculate a power headroom. It is determined that the second PHR type is the virtual PHR, that is, the virtual PHR is used to calculate a power headroom.

At least one PUSCH or PUCCH or SRS transmission exists in the first time interval, that is, at least one PUSCH or PUCCH or SRS transmission exists between the first moment and the second moment, or a PUSCH or PUCCH or SRS transmission exists at the first moment or the second moment.

Specifically, when at least one PUSCH or PUCCH or SRS transmission exists in the first time interval, it is determined that the second PHR type is the real PHR; otherwise, it is determined that the second PHR type is the virtual PHR, or in other words, when no PUSCH, PUCCH, or SRS transmission exists in the first time interval, it is determined that the second PHR type is the virtual PHR.

Optionally, the PHR policy may include:
when the latest uplink transmission from the second moment is a PUSCH or PUCCH or SRS transmission in an uplink transmission in the first time interval, determining that the second PHR type is the real PHR; otherwise, determining that the second PHR type is the virtual PHR.

In some embodiments of the present disclosure, when the latest uplink transmission from the second moment is a PUSCH or PUCCH or SRS transmission in the uplink transmission in the first time interval, it is determined that the second PHR type is the real PHR; otherwise, it is determined that the second PHR type is the virtual PHR, or in other words, when the latest uplink transmission from the second moment is not a PUSCH, PUCCH, or SRS transmission in the uplink transmission in the first time interval, it is determined that the second PHR type is the virtual PHR.

In some embodiments of the present disclosure, the second PHR type is determined based on the latest uplink transmission from the second moment, and a power headroom is calculated based on the determined second PHR type, thereby improving accuracy of power headroom calculation.

The following describes, with reference to an example, the power headroom reporting method provided in some embodiments of the present disclosure. T1 may be the first moment, and T2 may be the second moment.

### Example 1:

In the SUL scenario, when the UE triggers a PHR, a PUCCH transmission exists on the SUL carrier, and only PUSCH transmission exists on the non-SUL carrier. Therefore, only the PHR on the SUL carrier may be reported based on the foregoing carrier priority relationship.

### Example 2:

When the UE triggers a PHR, a PUSCH transmission exists between the moment T1 and the moment T2, the UE may report a type 1 real PHR, that is, the first PHR type is the type 1 PHR, and the second PHR type is the real PHR.

### Example 3:

When the UE triggers a PHR, an SRS transmission exists between the moment T1 and the moment T2, the UE may report a type 3 real PHR, that is, the first PHR type is the type 3 PHR, and the second PHR type is the real PHR.

### Example 4:

When the UE triggers a PHR, if the latest transmission from the moment T2 between the moment T1 and the moment T2 is a PUSCH transmission, the UE reports the type 1 PHR.

If at the moment T2, the network side instructs the UE to transmit a PUSCH, the UE reports the real PHR; otherwise, the virtual PHR is reported.

### Example 5:

When the UE triggers a PHR, if the latest transmission from the moment T2 between the moment T1 and the moment T2 is an SRS transmission, the UE reports the type 3 PHR.

If at the moment T2, the network side instructs the UE to transmit an SRS, the UE reports the real PHR; otherwise, the virtual PHR is reported.

### Example 6:

When the UE triggers a PHR, if the latest transmission from the moment T2 between the moment T1 and the moment T2 is a PUCCH transmission, the UE reports the type 1 PHR.

If at the moment T2, the network side instructs the UE to transmit only PUCCH, the UE reports the virtual PHR.

In some embodiments of the present disclosure, the carrier used for power headroom calculation and a power headroom reporting type (for example, a first power headroom reporting type and/or a second power headroom reporting type) are determined based on different channel types and an uplink transmission between a moment at which the UE triggers the PHR and a moment of the first new DCI, thereby reducing a probability of inaccurate power headroom reporting calculation and improving an uplink coverage or a throughput.

Referring to FIG. 3, FIG. 3 is a structural diagram of a terminal device according to some embodiments of the present disclosure. As shown in FIG. 3, a terminal device 300 includes:
a reporting module 301, configured to perform power headroom reporting according to a power headroom report PHR policy, where
the PHR policy is related to at least one of the following: a carrier used for power headroom calculation, or a target PHR type, the target PHR type includes a first PHR type and/or a second PHR type, the first PHR type includes a type 1 PHR, a type 2 PHR, or a type 3 PHR, and the second PHR type includes a real PHR or a virtual PHR.

Optionally, the PHR policy includes:
determining a first carrier used for power headroom calculation, where
the first carrier belongs to at least two carriers that carry a first uplink transmission of the terminal device, the first carrier is a carrier that has a highest priority in the at least two carriers and that is determined based on a carrier priority relationship, and the first uplink transmission includes transmission of an uplink physical channel or a reference signal.

Optionally, the carrier priority relationship includes at least one of the following:
a priority of a target carrier is higher than a priority of a source carrier;
a priority of a primary carrier is higher than a priority of a primary-secondary carrier, and the priority of the primary-secondary carrier is higher than a priority of a secondary carrier;
a priority of a carrier that carries a physical random access channel PRACH is higher than a priority of a carrier that does not carry a PRACH;
a priority of a carrier that carries a physical uplink control channel PUCCH is higher than a priority of a carrier that does not carry a PUCCH;
a priority of a carrier that carries an aperiodic sounding reference signal SRS is higher than a priority of a carrier that carries a physical uplink shared channel PUSCH, and the priority of the carrier that carries the PUSCH is higher than a priority of a carrier that carries a periodic or semi-persistent SRS; and
a priority of a carrier scrambled by a physical uplink shared channel PUSCH by using a first-type RNTI is higher than a carrier scrambled by the PUSCH by using a second-type RNTI, where the first-type RNTI is an MCS-C-RNTI, and the second-type RNTI is an RNTI other than the MCS-C-RNTI.

Optionally, the PHR policy includes:
determining the target PHR type based on an uplink transmission between a first moment and a second moment, where
the first moment is a moment at which the terminal device triggers power headroom reporting, and the second moment is a moment before power headroom reporting and after the first moment, or a moment of power headroom reporting.

Optionally, the PHR policy includes:
determining the target PHR type based on a second uplink transmission, where
the second uplink transmission is the latest uplink transmission from the second moment in the uplink transmission between the first moment and the second moment.

Optionally, the second moment is a receiving moment of first new downlink control information DCI after the first moment; or
the second moment is a Media Access Control MAC protocol data unit PDU packetizing moment after the receiving moment of the first new downlink control information DCI.

Optionally, the target PHR type includes the first PHR type; and
the PHR policy includes any one of the following:
when at least one PUSCH transmission exists between the first moment and the second moment, determining that the first PHR type is the type 1 PHR;
when at least one PUCCH transmission exists between the first moment and the second moment, determining that the first PHR type is the type 2 PHR;
when at least one SRS transmission exists between the first moment and the second moment, determining that the first PHR type is the type 3 PHR;
when only PUCCH transmission exists in the uplink transmission between the first moment and the second moment, determining that the first PHR type is the type 1 PHR or the type 3 PHR; and
when the latest uplink transmission from the second moment is a PUCCH transmission in the uplink transmission between the first moment and the second moment, determining that the first PHR type is the type 1 PHR or the type 3 PHR.

Optionally, the PHR policy includes at least one of the following:
when the latest uplink transmission from the second moment is a PUSCH transmission in the uplink transmission between the first moment and the second moment, determining that the first PHR type is the type 1 PHR;
when the latest uplink transmission from the second moment is a PUCCH transmission in the uplink transmission between the first moment and the second moment, determining that the first PHR type is the type 2 PHR; and
when the latest uplink transmission from the second moment is an SRS transmission in the uplink transmission between the first moment and the second moment, determining that the first PHR type is the type 3 PHR.

Optionally, the target PHR type includes the second PHR type; and
the PHR policy includes any one of the following:
when at least one PUSCH or PUCCH or SRS transmission exists in a first time interval, determining that the second PHR type is the real PHR; otherwise, determining that the second PHR type is the virtual PHR;
when only PUCCH transmission exists in the first time interval, determining that the second PHR type is the virtual PHR; and
when the latest uplink transmission from the second moment is a PUCCH transmission in the uplink transmission between the first moment and the second moment, determining that the second PHR type is the virtual PHR, where
the first time interval is [T1, T2], T1 is the first moment, and T2 is the second moment.

Optionally, the PHR policy includes:
when the latest uplink transmission from the second moment is a PUSCH or PUCCH or SRS transmission in an uplink transmission in the first time interval, determining that the second PHR type is the real PHR; otherwise, determining that the second PHR type is the virtual PHR.

The terminal device 300 provided in some embodiments of the present disclosure can implement the processes implemented by the terminal device in the method embodiment of FIG. 2. To avoid repetition, details are not described herein again.

According to the terminal device 300 in some embodiments of the present disclosure, the reporting module 301 is configured to perform power headroom reporting according to a power headroom report PHR policy, where the PHR policy is related to at least one of the following: a carrier used for power headroom calculation, or a target PHR type, the target PHR type includes a first PHR type and/or a second PHR type, the first PHR type includes a type 1 PHR, a type 2 PHR, or a type 3 PHR, and the second PHR type includes a real PHR or a virtual PHR. When the terminal device triggers power headroom reporting, the power headroom reporting policy may be used to determine the carrier used for power headroom calculation and/or the target PHR type, and power headroom reporting is performed, thereby improving accuracy of power headroom reporting.

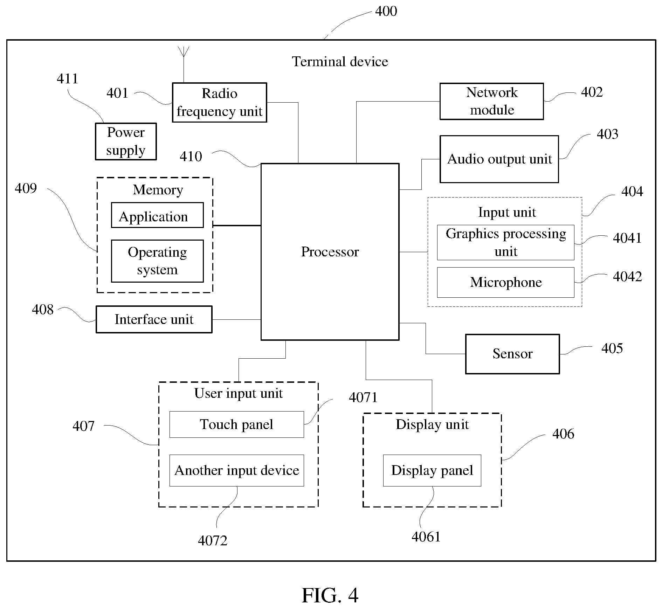

FIG. 4 is a structural diagram of a terminal device according to still another embodiment of the present disclosure. Referring to FIG. 4, a terminal device 400 includes but is not limited to components such as a radio frequency unit 401, a network module 402, an audio output unit 403, an input unit 404, a sensor 405, a display unit 406, a user input unit 407, an interface unit 408, a memory 409, a processor 410, and a power supply 411. A person skilled in the art may understand that the structure of the terminal device shown in FIG. 4 does not constitute a limitation to the terminal device. The terminal device may include more or fewer components than that shown in the figure, or a combination of some components, or an arrangement of different components. In some embodiments of the present disclosure, the terminal device includes but is not limited to a mobile phone, a tablet computer, a notebook computer, a palmtop computer, an in-vehicle terminal, a wearable device, a pedometer, and the like.

The radio frequency unit 401 is configured to perform power headroom reporting according to a power headroom report PHR policy, where the PHR policy is related to at least one of the following: a carrier used for power headroom calculation, or a target PHR type, the target PHR type includes a first PHR type and/or a second PHR type, the first PHR type includes a type 1 PHR, a type 2 PHR, or a type 3 PHR, and the second PHR type includes a real PHR or a virtual PHR.

In some embodiments of the present disclosure, when the terminal device triggers power headroom reporting, the power headroom reporting policy may be used to determine the carrier used for power headroom calculation and/or the target PHR type, and power headroom reporting is performed, thereby improving accuracy of power headroom reporting.

Optionally, the PHR policy includes:
determining a first carrier used for power headroom calculation, where
the first carrier belongs to at least two carriers that carry a first uplink transmission of the terminal device, the first carrier is a carrier that has a highest priority in the at least two carriers and that is determined based on a carrier priority relationship, and the first uplink transmission includes transmission of an uplink physical channel or a reference signal.

Optionally, the carrier priority relationship includes at least one of the following:
a priority of a target carrier is higher than a priority of a source carrier;
a priority of a primary carrier is higher than a priority of a primary-secondary carrier, and the priority of the primary-secondary carrier is higher than a priority of a secondary carrier;
a priority of a carrier that carries a physical random access channel PRACH is higher than a priority of a carrier that does not carry a PRACH;
a priority of a carrier that carries a physical uplink control channel PUCCH is higher than a priority of a carrier that does not carry a PUCCH;
a priority of a carrier that carries an aperiodic sounding reference signal SRS is higher than a priority of a carrier that carries a physical uplink shared channel PUSCH, and the priority of the carrier that carries the PUSCH is higher than a priority of a carrier that carries a periodic or semi-persistent SRS; and
a priority of a carrier scrambled by a physical uplink shared channel PUSCH by using a first-type RNTI is higher than a carrier scrambled by the PUSCH by using a second-type RNTI, where the first-type RNTI is an MCS-C-RNTI, and the second-type RNTI is an RNTI other than the MCS-C-RNTI.

Optionally, the PHR policy includes:
determining the target PHR type based on an uplink transmission between a first moment and a second moment, where
the first moment is a moment at which the terminal device triggers power headroom reporting, and the second moment is a moment before power headroom reporting and after the first moment, or a moment of power headroom reporting.

Optionally, the PHR policy includes:
determining the target PHR type based on a second uplink transmission, where
the second uplink transmission is the latest uplink transmission from the second moment in the uplink transmission between the first moment and the second moment.

Optionally, the second moment is a receiving moment of first new downlink control information DCI after the first moment; or
the second moment is a Media Access Control MAC protocol data unit PDU packetizing moment after the receiving moment of the first new downlink control information DCI.

Optionally, the target PHR type includes the first PHR type; and
the PHR policy includes any one of the following:
when at least one PUSCH transmission exists between the first moment and the second moment, determining that the first PHR type is the type 1 PHR;
when at least one PUCCH transmission exists between the first moment and the second moment, determining that the first PHR type is the type 2 PHR;
when at least one SRS transmission exists between the first moment and the second moment, determining that the first PHR type is the type 3 PHR;
when only PUCCH transmission exists in the uplink transmission between the first moment and the second moment, determining that the first PHR type is the type 1 PHR or the type 3 PHR; and
when the latest uplink transmission from the second moment is a PUCCH transmission in the uplink transmission between the first moment and the second moment, determining that the first PHR type is the type 1 PHR or the type 3 PHR.

Optionally, the PHR policy includes at least one of the following:
when the latest uplink transmission from the second moment is a PUSCH transmission in the uplink transmission between the first moment and the second moment, determining that the first PHR type is the type 1 PHR;
when the latest uplink transmission from the second moment is a PUCCH transmission in the uplink transmission between the first moment and the second moment, determining that the first PHR type is the type 2 PHR; and
when the latest uplink transmission from the second moment is an SRS transmission in the uplink transmission between the first moment and the second moment, determining that the first PHR type is the type 3 PHR.

Optionally, the target PHR type includes the second PHR type; and
the PHR policy includes any one of the following:
when at least one PUSCH or PUCCH or SRS transmission exists in a first time interval, determining that the second PHR type is the real PHR; otherwise, determining that the second PHR type is the virtual PHR;
when only PUCCH transmission exists in the first time interval, determining that the second PHR type is the virtual PHR; and
when the latest uplink transmission from the second moment is a PUCCH transmission in the uplink transmission between the first moment and the second moment, determining that the second PHR type is the virtual PHR, where
the first time interval is [T1, T2], T1 is the first moment, and T2 is the second moment.

Optionally, the PHR policy includes:
when the latest uplink transmission from the second moment is a PUSCH or PUCCH or SRS transmission in an uplink transmission in the first time interval, determining that the second PHR type is the real PHR; otherwise, determining that the second PHR type is the virtual PHR.

It should be understood that, in some embodiments of the present disclosure, the radio frequency unit 401 may be configured to receive and send information or receive and send a signal in a call process. Specifically, after receiving downlink data from a base station, the radio frequency unit 401 sends the downlink data to the processor 410 for processing. In addition, the radio frequency unit 401 sends uplink data to the base station. Generally, the radio frequency unit 401 includes, but is not limited to, an antenna, at least one amplifier, a transceiver, a coupler, a low noise amplifier, a duplexer, and the like. In addition, the radio frequency unit 401 may communicate with a network and another device through a wireless communication system.

The terminal device provides a user with wireless broadband Internet access through the network module 402, for example, helps the user send and receive emails, browse web pages, and access streaming media.

The audio output unit 403 may convert audio data received by the radio frequency unit 401 or the network module 402 or stored in the memory 409 into an audio signal and output the audio signal as a sound. In addition, the audio output unit 403 may further provide audio output (for example, call signal receiving sound or message receiving sound) related to a specific function performed by the terminal device 400. The audio output unit 403 includes a speaker, a buzzer, a telephone receiver, and the like.

The input unit 404 is configured to receive an audio signal or a video signal. The input unit 404 may include a graphics processing unit (Graphics Processing Unit, GPU) 4041 and a microphone 4042. The graphics processing unit 4041 processes image data of a static picture or a video obtained by an image capturing apparatus (for example, a camera) in a video capturing mode or an image capturing mode. A processed image frame may be displayed on the display unit 406. The image frame processed by the graphics processing unit 4041 can be stored in the memory 409 (or another storage medium) or sent via the radio frequency unit 401 or the network module 402. The microphone 4042 can receive sound and can process such sound into audio data. The audio data obtained through processing may be converted, in a telephone call mode, into a format that can be sent to a mobile communications base station via the radio frequency unit 401 for output.

The terminal device 400 further includes at least one sensor 405, such as an optical sensor, a motion sensor, and other sensors. Specifically, the optical sensor includes an ambient light sensor and a proximity sensor. The ambient light sensor may adjust luminance of the display panel 4061 based on brightness of ambient light. The proximity sensor may turn off the display panel 4061 and/or backlight when the terminal device 400 approaches an ear. As a type of the motion sensor, an accelerometer sensor may detect an acceleration in each direction (generally, three axes), and detect a value and a direction of gravity when the accelerometer sensor is static, and may be used to recognize a terminal device posture (such as screen switching between landscape and portrait modes, a related game, or magnetometer posture calibration), a function related to vibration recognition (such as a pedometer or a knock), and the like. The sensor 405 may further include a fingerprint sensor, a pressure sensor, an iris sensor, a molecular sensor, a gyroscope, a barometer, a hygrometer, a thermometer, and an infrared sensor. Details are not described herein.

The display unit 406 is configured to display information input by a user or information provided to a user. The display unit 406 may include the display panel 4061, and the display panel 4061 may be configured in a form of a liquid crystal display (Liquid Crystal Display, LCD), an organic light-emitting diode (Organic Light-Emitting Diode, OLED), or the like.

The user input unit 407 may be configured to receive input digit or character information, and generate a key signal input related to a user setting and function control of the terminal device. Specifically, the user input unit 407 includes a touch panel 4071 and another input device 4072. The touch panel 4071 is also referred to as a touchscreen, and may collect a touch operation performed by a user on or near the touch panel 4071 (such as an operation performed by a user on the touch panel 4071 or near the touch panel 4071 by using any proper object or accessory, such as a finger or a stylus). The touch panel 4071 may include two parts: a touch detection apparatus and a touch controller. The touch detection apparatus detects a touch position of the user, detects a signal brought by the touch operation, and transmits the signal to the touch controller. The touch controller receives touch information from the touch detection apparatus, converts the touch information into contact coordinates, transmits the contact coordinates to the processor 410, receives a command sent by the processor 410, and executes the command. In addition, the touch panel 4071 can be implemented in various types such as resistive, capacitive, infrared, and surface acoustic wave. The user input unit 407 may include another input device 4072 in addition to the touch panel 4071. Specifically, the another input device 4072 may include but is not limited to a physical keyboard, a functional button (such as a volume control button or a power on/off button), a trackball, a mouse, and a joystick. Details are not described herein.

Further, the touch panel 4071 may cover the display panel 4061. When detecting the touch operation on or near the touch panel 4071, the touch panel 4071 transmits the touch operation to the processor 410 to determine a type of a touch event, and then the processor 410 provides corresponding visual output on the display panel 4061 based on the type of the touch event. Although in FIG. 4, the touch panel 4071 and the display panel 4061 are configured as two independent components to implement input and output functions of the terminal device, in some embodiments, the touch panel 4071 and the display panel 4061 can be integrated to implement the input and output functions of the terminal device. Details are not limited herein.

The interface unit 408 is an interface for connecting an external apparatus to the terminal device 400. For example, the external apparatus may include a wired or wireless headset port, an external power supply (or a battery charger) port, a wired or wireless data port, a memory card port, a port for connecting an apparatus having an identification module, an audio input/output (I/O) port, a video I/O port, a headset port, and the like. The interface unit 408 may be configured to receive input (for example, data information and power) from the external apparatus and transmit the received input to one or more elements in the terminal device 400, or may be configured to transmit data between the terminal device 400 and the external apparatus.

The memory 409 may be configured to store a software program and various data. The memory 409 may mainly include a program storage area and a data storage area. The program storage area may store an operating system, an application program required by at least one function (such as a sound play function or an image play function), and the like. The data storage area may store data (such as audio data or an address book) created based on use of the mobile phone, and the like. In addition, the memory 409 may include a high-speed random access memory, and may further include a non-volatile memory such as at least one magnetic disk storage component, a flash memory component, or another volatile solid-state storage component.

The processor 410 is a control center of the terminal. The processor 410 uses various interfaces and lines to connect the various parts of the entire terminal device, and performs various functions of the terminal device and processes data by running or executing software programs and/or modules stored in the memory 409 and invoking data stored in the memory 409, to monitor the terminal device as a whole. The processor 410 may include one or more processing units. Optionally, the processor 410 may integrate an application processor and a modem processor. The application processor mainly deals with an operating system, a user interface, and an application program. The modem processor mainly deals with wireless communication. It may be understood that alternatively, the modem processor may not be integrated into the processor 410.

The terminal device 400 may further include the power supply 411 (such as a battery) supplying power to each component. Optionally, the power supply 411 may be logically connected to the processor 410 by using a power management system, so as to implement functions such as charging management, discharging management and power consumption management by using the power management system.

In addition, the terminal device 400 includes some functional modules that are not illustrated. Details are not described herein.

Optionally, some embodiments of the present disclosure further provide a terminal device, including a processor 410, a memory 409, and a computer program that is stored in the memory 409 and that can run on the processor 410. When the computer program is executed by the processor 410, the processes of the foregoing power headroom reporting method are implemented and a same technical effect can be achieved. To avoid repetition, details are not described herein again.

Some embodiments of the present disclosure further provide a computer readable storage medium. The computer readable storage medium stores a computer program, and when the computer program is executed by a processor, the processes of the foregoing power headroom reporting method are implemented and a same technical effect can be achieved. To avoid repetition, details are not described herein again. The computer readable storage medium may be a read-only memory (Read-Only Memory, ROM), a random access memory (Random Access Memory, RAM), a magnetic disk, a compact disc, or the like.

It should be noted that, in this specification, the terms "include", "comprise", or their any other variant are intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of the present disclosure essentially, or the part contributing to the related technologies may be implemented in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of the present disclosure.

The embodiments of the present disclosure are described above with reference to the accompanying drawings, but the present disclosure is not limited to the foregoing specific implementations. The foregoing specific implementations are merely schematic instead of restrictive. Under enlightenment of the present disclosure, a person of ordinary skills in the art may make many forms without departing from the aims of the present disclosure and the protection scope of claims, all of which fall within the protection of the present disclosure.

## Claims

1. A power headroom reporting method, performed by a terminal device comprising:
performing (201) power headroom reporting of a target PHR type according to a power headroom report, PHR, policy, wherein
the PHR policy is related to the target PHR type, the target PHR type comprises a first PHR type and/or a second PHR type, the first PHR type comprises a type 1 PHR, a type 2 PHR, or a type 3 PHR, and the second PHR type comprises a real PHR or a virtual PHR;
wherein the PHR policy comprises: determining the target PHR type based on an uplink transmission between a first moment and a second moment, wherein the first moment is a moment at which the terminal device triggers power headroom reporting, and the second moment is a moment of power headroom reporting;
wherein the determining the target PHR type based on an uplink transmission between a first moment and a second moment, comprises at least one of the following:
when at least one PUSCH transmission exists between the first moment and the second moment, determining that the target PHR type is the first PHR type, wherein the first PHR type is the type 1 PHR; or,
when at least one SRS transmission exists between the first moment and the second moment, determining that the target PHR type is the first PHR type, wherein the first PHR type is the type 3 PHR.

2. The method according to claim 1, wherein the PHR policy further comprises:
determining a first carrier used for power headroom calculation, wherein
the first carrier belongs to at least two carriers that carry a first uplink transmission of the terminal device, the first carrier is a carrier that has a highest priority in the at least two carriers and that is determined based on a carrier priority relationship, and the first uplink transmission comprises transmission of an uplink physical channel or a reference signal.

3. The method according to claim 2, wherein the carrier priority relationship comprises at least one of the following:
a priority of a target carrier is higher than a priority of a source carrier;
a priority of a primary carrier is higher than a priority of a primary-secondary carrier, and the priority of the primary-secondary carrier is higher than a priority of a secondary carrier;
a priority of a carrier that carries a physical random access channel, PRACH, is higher than a priority of a carrier that does not carry a PRACH;
a priority of a carrier that carries a physical uplink control channel, PUCCH, is higher than a priority of a carrier that does not carry a PUCCH;
a priority of a carrier that carries an aperiodic sounding reference signal, SRS, is higher than a priority of a carrier that carries a physical uplink shared channel, PUSCH, and the priority of the carrier that carries the PUSCH is higher than a priority of a carrier that carries a periodic or semi-persistent, SRS; and
a priority of a carrier scrambled by a physical uplink shared channel, PUSCH, by using a first-type radio network temporary identifier, RNTI, is higher than a carrier scrambled by the PUSCH by using a second-type RNTI, wherein the first-type RNTI is a modulation and coding scheme-cell radio network temporary identifier, MCS-C-RNTI, and the second-type RNTI is an RNTI other than the MCS-C-RNTI.

4. The method according to claim 1, wherein the PHR policy further comprises:
determining the target PHR type based on a second uplink transmission, wherein
the second uplink transmission is the latest uplink transmission from the second moment in the uplink transmission between the first moment and the second moment.

5. The method according to claim 1, wherein the target PHR type comprises the first PHR type; and
the PHR policy further comprises any one of the following:
when at least one PUCCH transmission exists between the first moment and the second moment, determining that the first PHR type is the type 2 PHR;
when only PUCCH transmission exists in the uplink transmission between the first moment and the second moment, determining that the first PHR type is the type 1 PHR or the type 3 PHR;
when the latest uplink transmission from the second moment is a PUCCH transmission in the uplink transmission between the first moment and the second moment, determining that the first PHR type is the type 1 PHR or the type 3 PHR; and
when the latest uplink transmission from the second moment is a PUCCH transmission in the uplink transmission between the first moment and the second moment, determining that the first PHR type is the type 2 PHR.

6. The method according to claim 5, wherein the PHR policy further comprises at least one of the following:
when the latest uplink transmission from the second moment is a PUSCH transmission in the uplink transmission between the first moment and the second moment, determining that the first PHR type is the type 1 PHR;
when the latest uplink transmission from the second moment is an SRS transmission in the uplink transmission between the first moment and the second moment, determining that the first PHR type is the type 3 PHR.

7. The method according to claim 1, wherein the target PHR type comprises the second PHR type; and
the PHR policy further comprises any one of the following:
when none of PUSCH or PUCCH or SRS transmission exists in a first time interval, determining that the second PHR type is the virtual PHR;
when only PUCCH transmission exists in the first time interval, determining that the second PHR type is the virtual PHR; and
when the latest uplink transmission from the second moment is a PUCCH transmission in the uplink transmission between the first moment and the second moment, determining that the second PHR type is the virtual PHR, wherein
the first time interval is [T1, T2], T1 is the first moment, and T2 is the second moment.

8. The method according to claim 7, wherein the PHR policy further comprises:
when the latest uplink transmission from the second moment is a PUSCH or PUCCH or SRS transmission in an uplink transmission in the first time interval, determining that the second PHR type is the real PHR; otherwise, determining that the second PHR type is the virtual PHR.

9. A terminal device (300), comprising:
a reporting module (301), configured to perform power headroom reporting of a target PHR type according to a power headroom report, PHR, policy, wherein
the PHR policy is related to the target PHR type, the target PHR type comprises a first PHR type and/or a second PHR type, the first PHR type comprises a type 1 PHR, a type 2 PHR, or a type 3 PHR, and the second PHR type comprises a real PHR or a virtual PHR;
wherein the PHR policy comprises: determining the target PHR type based on an uplink transmission between a first moment and a second moment, wherein the first moment is a moment at which the terminal device triggers power headroom reporting, and the second moment is a moment of power headroom reporting;
wherein the determining the target PHR type based on an uplink transmission between a first moment and a second moment, comprises at least one of the following:
when at least one PUSCH transmission exists between the first moment and the second moment, determining that the target PHR type is the first PHR type, wherein the first PHR type is the type 1 PHR; or,
when at least one SRS transmission exists between the first moment and the second moment, determining that the target PHR type is the first PHR type, wherein the first PHR type is the type 3 PHR.

10. The terminal device (300) according to claim 9, wherein the target PHR type comprises the first PHR type; and
the PHR policy further comprises any one of the following:
when at least one PUCCH transmission exists between the first moment and the second moment, determining that the first PHR type is the type 2 PHR;
when only PUCCH transmission exists in the uplink transmission between the first moment and the second moment, determining that the first PHR type is the type 1 PHR or the type 3 PHR;
when the latest uplink transmission from the second moment is a PUCCH transmission in the uplink transmission between the first moment and the second moment, determining that the first PHR type is the type 1 PHR or the type 3 PHR; and
when the latest uplink transmission from the second moment is a PUCCH transmission in the uplink transmission between the first moment and the second moment, determining that the first PHR type is the type 2 PHR.

11. The terminal device (300) according to claim 10, wherein the PHR policy further comprises at least one of the following:
when the latest uplink transmission from the second moment is a PUSCH transmission in the uplink transmission between the first moment and the second moment, determining that the first PHR type is the type 1 PHR;
when the latest uplink transmission from the second moment is an SRS transmission in the uplink transmission between the first moment and the second moment, determining that the first PHR type is the type 3 PHR.

12. The terminal device (300) according to claim 9, wherein the target PHR type comprises the second PHR type; and
the PHR policy further comprises any one of the following:
when none of PUSCH or PUCCH or SRS transmission exists in a first time interval, determining that the second PHR type is the virtual PHR;
when only PUCCH transmission exists in the first time interval, determining that the second PHR type is the virtual PHR; and
when the latest uplink transmission from the second moment is a PUCCH transmission in the uplink transmission between the first moment and the second moment, determining that the second PHR type is the virtual PHR, wherein
the first time interval is [T1, T2], T1 is the first moment, and T2 is the second moment.

13. The terminal device according to claim 9, wherein the PHR policy further comprises:
determining a first carrier used for power headroom calculation, wherein
the first carrier belongs to at least two carriers that carry a first uplink transmission of the terminal device, the first carrier is a carrier that has a highest priority in the at least two carriers and that is determined based on a carrier priority relationship, and the first uplink transmission comprises transmission of an uplink physical channel or a reference signal.

14. The terminal device (300) according to claim 13, wherein the carrier priority relationship comprises at least one of the following:
a priority of a target carrier is higher than a priority of a source carrier;
a priority of a primary carrier is higher than a priority of a primary-secondary carrier, and the priority of the primary-secondary carrier is higher than a priority of a secondary carrier;
a priority of a carrier that carries a physical random access channel, PRACH, is higher than a priority of a carrier that does not carry a PRACH;
a priority of a carrier that carries a physical uplink control channel, PUCCH, is higher than a priority of a carrier that does not carry a PUCCH;
a priority of a carrier that carries an aperiodic sounding reference signal, SRS, is higher than a priority of a carrier that carries a physical uplink shared channel, PUSCH, and the priority of the carrier that carries the PUSCH is higher than a priority of a carrier that carries a periodic or semi-persistent, SRS; and
a priority of a carrier scrambled by a physical uplink shared channel, PUSCH, by using a first-type radio network temporary identifier, RNTI, is higher than a carrier scrambled by the PUSCH by using a second-type RNTI, wherein the first-type RNTI is a modulation and coding scheme-cell radio network temporary identifier, MCS-C-RNTI, and the second-type RNTI is an RNTI other than the MCS-C-RNTI.

15. The terminal device (300) according to claim 9, wherein the PHR policy further comprises:
determining the target PHR type based on a second uplink transmission, wherein
the second uplink transmission is the latest uplink transmission from the second moment in the uplink transmission between the first moment and the second moment.

## Patentansprüche

1. Verfahren zur Meldung von Leistungsreserven, das von einer Endgerätvorrichtung durchgeführt wird, umfassend:
Durchführen (201) von Meldung von Leistungsreserven eines Ziel-PHR-Typs gemäß einer Richtlinie zur Meldung von Leistungsreserven, PHR, wobei
die PHR-Richtlinie mit dem Ziel-PHR-Typ in Beziehung steht, der Ziel-PHR-Typ einen ersten PHR-Typ und/oder einen zweiten PHR-Typ umfasst, der erste PHR-Typ einen Typ 1-PHR, einen Typ 2-PHR oder einen Typ 3-PHR umfasst und der zweite PHR-Typ eine reale PHR oder eine virtuelle PHR umfasst;
wobei die PHR-Richtlinie Folgendes umfasst: Bestimmen des Ziel-PHR-Typs auf Grundlage einer Uplink-Übertragung zwischen einem ersten Moment und einem zweiten Moment, wobei der erste Moment ein Moment ist, zu dem die Endgerätvorrichtung eine Meldung von Leistungsreserven auslöst, und der zweite Moment ein Moment zur Meldung von Leistungsreserven ist;
wobei das Bestimmen des Ziel-PHR-Typs auf Grundlage einer Uplink-Übertragung zwischen einem ersten Moment und einem zweiten Moment mindestens eines der Folgenden umfasst:
wenn mindestens eine PUSCH-Übertragung zwischen dem ersten Moment und dem zweiten Moment vorliegt, Bestimmen, dass der Ziel-PHR-Typ der erste PHR-Typ ist, wobei der erste PHR-Typ der Typ 1-PHR ist; oder
wenn mindestens eine SRS-Übertragung zwischen dem ersten Moment und dem zweiten Moment vorliegt, Bestimmen, dass der Ziel-PHR-Typ der erste PHR-Typ ist, wobei der erste PHR-Typ der Typ 3-PHR ist.

2. Verfahren nach Anspruch 1, wobei die PHR-Richtlinie ferner Folgendes umfasst:
Bestimmen eines ersten Trägers, der für die Berechnung von Leistungsreserven verwendet wird, wobei
der erste Träger zu mindestens zwei Trägern gehört, die eine erste Uplink-Übertragung der Endgerätvorrichtung tragen, der erste Träger ein Träger ist, der eine höchste Priorität in den mindestens zwei Trägern aufweist und der auf Grundlage einer Trägerprioritätsbeziehung bestimmt wird, und die erste Uplink-Übertragung die Übertragung eines physikalischen Uplink-Kanals oder eines Referenzsignals umfasst.

3. Verfahren nach Anspruch 2, wobei die Trägerprioritätsbeziehung mindestens eine der Folgenden umfasst:
eine Priorität eines Zielträgers höher als eine Priorität eines Quellträgers ist;
eine Priorität eines primären Trägers höher als eine Priorität eines primären-sekundären Trägers ist und die Priorität des primären-sekundären Trägers höher als eine Priorität eines sekundären Trägers ist;
eine Priorität eines Trägers, der einen physikalischen Direktzugriffskanal, PRACH, trägt, höher als eine Priorität eines Trägers ist, der keinen PRACH trägt;
eine Priorität eines Trägers, der einen physikalischen Uplink-Steuerkanal, PUCCH, trägt, höher als eine Priorität eines Trägers ist, der keinen PUCCH trägt;
eine Priorität eines Trägers, der ein aperiodisch klingendes Referenzsignal, SRS, trägt, höher als eine Priorität eines Trägers ist, der einen gemeinsam genutzten physikalischen Uplink-Kanal, PUSCH, trägt, und die Priorität des Trägers, der den PUSCH trägt, höher als eine Priorität eines Trägers ist, der ein periodisches oder halbpersistentes SRS trägt; und
eine Priorität eines Trägers, der durch einen gemeinsam genutzten physikalischen Uplink-Kanal, PUSCH, unter Verwendung einer temporären Kennung des Funknetzwerks des ersten Typs, RNTI, verschlüsselt wird, höher als ein Träger ist, der durch den PUSCH unter Verwendung einer RNTI des zweiten Typs verschlüsselt wird, wobei die RNTI des ersten Typs eine temporäre Kennung für ein Modulations- und Codierungsschema-Zellenfunknetzwerk, MCS-C-RNTI, ist und die RNTI des zweiten Typs eine andere RNTI als die MCS-C-RNTI ist.

4. Verfahren nach Anspruch 1, wobei die PHR-Richtlinie ferner Folgendes umfasst:
Bestimmen des Ziel-PHR-Typs auf Grundlage einer zweiten Uplink-Übertragung, wobei
die zweite Uplink-Übertragung die neueste Uplink-Übertragung von dem zweiten Moment in der Uplink-Übertragung zwischen dem ersten Moment und dem zweiten Moment ist.

5. Verfahren nach Anspruch 1, wobei der Ziel-PHR-Typ den ersten PHR-Typ umfasst; und
die PHR-Richtlinie ferner eines beliebigen der Folgenden umfasst:
wenn mindestens eine PUCCH-Übertragung zwischen dem ersten Moment und dem zweiten Moment vorliegt, Bestimmen, dass der erste PHR-Typ der Typ 2-PHR ist;
wenn nur eine PUCCH-Übertragung in der Uplink-Übertragung zwischen dem ersten Moment und dem zweiten Moment vorliegt, Bestimmen, dass der erste PHR-Typ der Typ 1-PHR oder der Typ 3-PHR ist;
wenn die neueste Uplink-Übertragung von dem zweiten Moment eine PUCCH-Übertragung in der Uplink-Übertragung zwischen dem ersten Moment und dem zweiten Moment ist, Bestimmen, dass der erste PHR-Typ der Typ 1-PHR oder der Typ 3-PHR ist; und
wenn die neueste Uplink-Übertragung von dem zweiten Moment eine PUCCH-Übertragung in der Uplink-Übertragung zwischen dem ersten Moment und dem zweiten Moment ist, Bestimmen, dass der erste PHR-Typ der Typ 2-PHR ist.

6. Verfahren nach Anspruch 5, wobei die PHR-Richtlinie ferner mindestens eines der Folgenden umfasst:
wenn die neueste Uplink-Übertragung von dem zweiten Moment eine PUSCH-Übertragung in der Uplink-Übertragung zwischen dem ersten Moment und dem zweiten Moment ist, Bestimmen, dass der erste PHR-Typ der Typ 1-PHR ist;
wenn die neueste Uplink-Übertragung von dem zweiten Moment eine SRS-Übertragung in der Uplink-Übertragung zwischen dem ersten Moment und dem zweiten Moment ist, Bestimmen, dass der erste PHR-Typ der Typ 3-PHR ist.

7. Verfahren nach Anspruch **1,** wobei der Ziel-PHR-Typ den zweiten PHR-Typ umfasst; und
die PHR-Richtlinie ferner eines beliebigen der Folgenden umfasst:
wenn in einem ersten Zeitintervall keine PUSCH- oder PUCCH- oder SRS-Übertragung vorliegt, Bestimmen, dass der zweite PHR-Typ die virtuelle PHR ist;
wenn nur eine PUCCH-Übertragung in dem ersten Zeitintervall vorliegt, Bestimmen, dass der zweite PHR-Typ die virtuelle PHR ist; und
wenn die neueste Uplink-Übertragung von dem zweiten Moment eine PUCCH-Übertragung in der Uplink-Übertragung zwischen dem ersten Moment und dem zweiten Moment ist, Bestimmen, dass der zweite PHR-Typ die virtuelle PHR ist, wobei
das erste Zeitintervall [T1, T2] ist, T1 der erste Moment ist und T2 der zweite Moment ist.

8. Verfahren nach Anspruch 7, wobei die PHR-Richtlinie ferner Folgendes umfasst:
wenn die neueste Uplink-Übertragung von dem zweiten Moment eine PUSCH- oder PUCCH- oder SRS-Übertragung in einer Uplink-Übertragung in dem ersten Zeitintervall ist, Bestimmen, dass der zweite PHR-Typ die reale PHR ist; andernfalls Bestimmen, dass der zweite PHR-Typ die virtuelle PHR ist.

9. Endgerätvorrichtung (300), umfassend:
ein Meldungsmodul (301), das zum Durchführen von Meldung von Leistungsreserven eines Ziel-PHR-Typs gemäß einer Richtlinie zur Meldung von Leistungsreserven, PHR, konfiguriert ist, wobei
die PHR-Richtlinie mit dem Ziel-PHR-Typ in Beziehung steht, der Ziel-PHR-Typ einen ersten PHR-Typ und/oder einen zweiten PHR-Typ umfasst, der erste PHR-Typ einen Typ 1-PHR, einen Typ 2-PHR oder einen Typ 3-PHR umfasst und der zweite PHR-Typ eine reale PHR oder eine virtuelle PHR umfasst;
wobei die PHR-Richtlinie Folgendes umfasst: Bestimmen des Ziel-PHR-Typs auf Grundlage einer Uplink-Übertragung zwischen einem ersten Moment und einem zweiten Moment, wobei der erste Moment ein Moment ist, zu dem die Endgerätvorrichtung eine Meldung von Leistungsreserven auslöst, und der zweite Moment ein Moment zur Meldung von Leistungsreserven ist;
wobei das Bestimmen des Ziel-PHR-Typs auf Grundlage einer Uplink-Übertragung zwischen einem ersten Moment und einem zweiten Moment mindestens eines der Folgenden umfasst:
wenn mindestens eine PUSCH-Übertragung zwischen dem ersten Moment und dem zweiten Moment vorliegt, Bestimmen, dass der Ziel-PHR-Typ der erste PHR-Typ ist, wobei der erste PHR-Typ der Typ 1-PHR ist; oder
wenn mindestens eine SRS-Übertragung zwischen dem ersten Moment und dem zweiten Moment vorliegt, Bestimmen, dass der Ziel-PHR-Typ der erste PHR-Typ ist, wobei der erste PHR-Typ der Typ 3-PHR ist.

10. Endgerätvorrichtung (300) nach Anspruch 9, wobei der Ziel-PHR-Typ den ersten PHR-Typ umfasst; und
die PHR-Richtlinie ferner eines beliebigen der Folgenden umfasst:
wenn mindestens eine PUCCH-Übertragung zwischen dem ersten Moment und dem zweiten Moment vorliegt, Bestimmen, dass der erste PHR-Typ der Typ 2-PHR ist;
wenn nur eine PUCCH-Übertragung in der Uplink-Übertragung zwischen dem ersten Moment und dem zweiten Moment vorliegt, Bestimmen, dass der erste PHR-Typ der Typ 1-PHR oder der Typ 3-PHR ist;
wenn die neueste Uplink-Übertragung von dem zweiten Moment eine PUCCH-Übertragung in der Uplink-Übertragung zwischen dem ersten Moment und dem zweiten Moment ist, Bestimmen, dass der erste PHR-Typ der Typ 1-PHR oder der Typ 3-PHR ist; und
wenn die neueste Uplink-Übertragung von dem zweiten Moment eine PUCCH-Übertragung in der Uplink-Übertragung zwischen dem ersten Moment und dem zweiten Moment ist, Bestimmen, dass der erste PHR-Typ der Typ 2-PHR ist.

11. Endgerätvorrichtung (300) nach Anspruch 10, wobei die PHR-Richtlinie ferner mindestens eines der Folgenden umfasst:
wenn die neueste Uplink-Übertragung von dem zweiten Moment eine PUSCH-Übertragung in der Uplink-Übertragung zwischen dem ersten Moment und dem zweiten Moment ist, Bestimmen, dass der erste PHR-Typ der Typ 1-PHR ist;
wenn die neueste Uplink-Übertragung von dem zweiten Moment eine SRS-Übertragung in der Uplink-Übertragung zwischen dem ersten Moment und dem zweiten Moment ist, Bestimmen, dass der erste PHR-Typ der Typ 3-PHR ist.

12. Endgerätvorrichtung (300) nach Anspruch 9, wobei der Ziel-PHR-Typ den zweiten PHR-Typ umfasst; und
die PHR-Richtlinie ferner eines beliebigen der Folgenden umfasst:
wenn in einem ersten Zeitintervall keine PUSCH- oder PUCCH- oder SRS-Übertragung vorliegt, Bestimmen, dass der zweite PHR-Typ die virtuelle PHR ist;
wenn nur eine PUCCH-Übertragung in dem ersten Zeitintervall vorliegt, Bestimmen, dass der zweite PHR-Typ die virtuelle PHR ist; und
wenn die neueste Uplink-Übertragung von dem zweiten Moment eine PUCCH-Übertragung in der Uplink-Übertragung zwischen dem ersten Moment und dem zweiten Moment ist, Bestimmen, dass der zweite PHR-Typ die virtuelle PHR ist, wobei
das erste Zeitintervall [T1, T2] ist, T1 der erste Moment ist und T2 der zweite Moment ist.

13. Endgerätvorrichtung nach Anspruch 9, wobei die PHR-Richtlinie ferner Folgendes umfasst:
Bestimmen eines ersten Trägers, der für die Berechnung von Leistungsreserven verwendet wird, wobei
der erste Träger zu mindestens zwei Trägern gehört, die eine erste Uplink-Übertragung der Endgerätvorrichtung tragen, der erste Träger ein Träger ist, der eine höchste Priorität in den mindestens zwei Trägern aufweist und der auf Grundlage einer Trägerprioritätsbeziehung bestimmt wird, und die erste Uplink-Übertragung die Übertragung eines physikalischen Uplink-Kanals oder eines Referenzsignals umfasst.

14. Endgerätvorrichtung (300) nach Anspruch 13, wobei die Trägerprioritätsbeziehung mindestens eines der Folgenden umfasst:
eine Priorität eines Zielträgers höher als eine Priorität eines Quellträgers ist;
eine Priorität eines primären Trägers höher als eine Priorität eines primären-sekundären Trägers ist und die Priorität des primären-sekundären Trägers höher als eine Priorität eines sekundären Trägers ist;
eine Priorität eines Trägers, der einen physikalischen Direktzugriffskanal, PRACH, trägt, höher als eine Priorität eines Trägers ist, der keinen PRACH trägt;
eine Priorität eines Trägers, der einen physikalischen Uplink-Steuerkanal, PUCCH, trägt, höher als eine Priorität eines Trägers ist, der keinen PUCCH trägt;
eine Priorität eines Trägers, der ein aperiodisch klingendes Referenzsignal, SRS, trägt, höher als eine Priorität eines Trägers ist, der einen gemeinsam genutzten physikalischen Uplink-Kanal, PUSCH, trägt, und die Priorität des Trägers, der den PUSCH trägt, höher als eine Priorität eines Trägers ist, der ein periodisches oder halbpersistentes SRS trägt; und
eine Priorität eines Trägers, der durch einen gemeinsam genutzten physikalischen Uplink-Kanal, PUSCH, unter Verwendung einer temporären Kennung des Funknetzwerks des ersten Typs, RNTI, verschlüsselt wird, höher als ein Träger ist, der durch den PUSCH unter Verwendung einer RNTI des zweiten Typs verschlüsselt wird, wobei die RNTI des ersten Typs eine temporäre Kennung für ein Modulations- und Codierungsschema-Zellenfunknetzwerk, MCS-C-RNTI, ist und die RNTI des zweiten Typs eine andere RNTI als die MCS-C-RNTI ist.

15. Endgerätvorrichtung (300) nach Anspruch 9, wobei die PHR-Richtlinie ferner Folgendes umfasst:
Bestimmen des Ziel-PHR-Typs auf Grundlage einer zweiten Uplink-Übertragung, wobei
die zweite Uplink-Übertragung die neueste Uplink-Übertragung von dem zweiten Moment in der Uplink-Übertragung zwischen dem ersten Moment und dem zweiten Moment ist.

## Revendications

1. Procédé de rapport de marge de puissance, exécuté par un dispositif terminal, comprenant :
exécuter (201) un rapport de marge de puissance d'un type de PHR cible selon une politique de rapport de marge de puissance, PHR, dans lequel
la politique de PHR est liée au type de PHR cible, le type de PHR cible comprend un premier type de PHR et/ou un deuxième type de PHR, le premier type de PHR comprend un PHR de type 1, un PHR de type 2 ou un PHR de type 3, et le deuxième type de PHR comprend un PHR réel ou un PHR virtuel ;
dans lequel la politique de PHR comprend : déterminer le type de PHR cible sur la base d'une transmission de liaison montante entre un premier moment et un second moment, dans lequel le premier moment est un moment auquel le dispositif terminal déclenche le rapport de marge de puissance, et le second moment est un moment de rapport de marge de puissance ;
dans lequel la détermination du type de PHR cible sur la base d'une transmission de liaison montante entre un premier moment et un second moment comprend au moins l'une des opérations suivantes :
lorsqu'au moins une transmission PUSCH existe entre le premier moment et le second moment, déterminer que le type de PHR cible est le premier type de PHR, dans lequel le premier type de PHR est le PHR de type 1 ; ou,
lorsqu'au moins une transmission SRS existe entre le premier moment et le second moment, déterminer que le type de PHR cible est le premier type de PHR, dans lequel le premier type de PHR est le PHR de type 3.

2. Procédé selon la revendication 1, dans lequel la politique de PHR comprend en outre :
déterminer une première porteuse utilisée pour le calcul de la marge de puissance, dans lequel
la première porteuse appartient à au moins deux porteuses qui transportent une première transmission de liaison montante du dispositif terminal, la première porteuse est une porteuse qui a une priorité la plus élevée dans les au moins deux porteuses et qui est déterminée sur la base d'une relation de priorité de porteuse, et la première transmission de liaison montante comprend la transmission d'un canal physique de liaison montante ou d'un signal de référence.

3. Procédé selon la revendication 2, dans lequel la relation de priorité de porteuse comprend au moins l'un des éléments suivants :
une priorité d'une porteuse cible est supérieure à une priorité d'une porteuse source ;
une priorité d'une porteuse primaire est supérieure à une priorité d'une porteuse primaire-secondaire, et la priorité de la porteuse primaire-secondaire est supérieure à une priorité d'une porteuse secondaire ;
une priorité d'une porteuse qui transporte un canal physique d'accès aléatoire, PRACH, est supérieure à une priorité d'une porteuse qui ne transporte pas un PRACH ;
une priorité d'une porteuse qui transporte un canal physique de commande de liaison montante, PUCCH, est supérieure à une priorité d'une porteuse qui ne transporte pas un PUCCH ;
une priorité d'une porteuse qui transporte un signal de référence de sondage, SRS, apériodique est supérieure à une priorité d'une porteuse qui transporte un canal physique partagé de liaison montante, PUSCH, et la priorité de la porteuse qui transporte le PUSCH est supérieure à une priorité d'une porteuse qui transporte un SRS périodique ou semi-persistant ; et
une priorité d'une porteuse brouillée par un canal physique partagé de liaison montante, PUSCH, en utilisant un identifiant temporaire de réseau radio, RNTI, de premier type est supérieure à une porteuse brouillée par le PUSCH en utilisant un RNTI de deuxième type, dans lequel le RNTI de premier type est un identifiant temporaire de réseau radio de cellule de schéma de modulation et de codage, MCS-C-RNTI, et le RNTI de deuxième type est un RNTI autre que le MCS-C-RNTI.

4. Procédé selon la revendication 1, dans lequel la politique de PHR comprend en outre :
déterminer le type de PHR cible sur la base d'une seconde transmission de liaison montante, dans lequel
la seconde transmission de liaison montante est la dernière transmission de liaison montante à partir du second moment dans la transmission de liaison montante entre le premier moment et le second moment.

5. Procédé selon la revendication 1, dans lequel le type de PHR cible comprend le premier type de PHR ; et
la politique de PHR comprend en outre l'une quelconque des opérations suivantes :
lorsqu'au moins une transmission PUCCH existe entre le premier moment et le second moment, déterminer que le premier type de PHR est le PHR de type 2 ;
lorsqu'il n'existe que la transmission PUCCH dans la transmission de liaison montante entre le premier moment et le second moment, déterminer que le premier type de PHR est le PHR de type 1 ou le PHR de type 3 ;
lorsque la dernière transmission de liaison montante à partir du second moment est une transmission PUCCH dans la transmission de liaison montante entre le premier moment et le second moment, déterminer que le premier type de PHR est le PHR de type 1 ou le PHR de type 3 ; et
lorsque la dernière transmission de liaison montante à partir du second moment est une transmission PUCCH dans la transmission de liaison montante entre le premier moment et le second moment, déterminer que le premier type de PHR est le PHR de type 2.

6. Procédé selon la revendication 5, dans lequel la politique de PHR comprend en outre au moins l'une des opérations suivantes :
lorsque la dernière transmission de liaison montante à partir du second moment est une transmission PUSCH dans la transmission de liaison montante entre le premier moment et le second moment, déterminer que le premier type de PHR est le PHR de type 1 ;
lorsque la dernière transmission de liaison montante à partir du second moment est une transmission SRS dans la transmission de liaison montante entre le premier moment et le second moment, déterminer que le premier type de PHR est le PHR de type 3.

7. Procédé selon la revendication 1, dans lequel le type de PHR cible comprend le deuxième type de PHR ; et
la politique de PHR comprend en outre l'une quelconque des opérations suivantes :
lorsqu'aucune transmission PUSCH ou PUCCH ou SRS n'existe dans un premier intervalle de temps, déterminer que le deuxième type de PHR est le PHR virtuel ;
lorsqu'il n'existe que la transmission PUCCH dans le premier intervalle de temps, déterminer que le deuxième type de PHR est le PHR virtuel ; et
lorsque la dernière transmission de liaison montante à partir du second moment est une transmission PUCCH dans la transmission de liaison montante entre le premier moment et le second moment, déterminer que le deuxième type de PHR est le PHR virtuel, dans lequel
le premier intervalle de temps est [T1, T2], T1 est le premier moment et T2 est le second moment.

8. Procédé selon la revendication 7, dans lequel la politique de PHR comprend en outre :
lorsque la dernière transmission de liaison montante à partir du second moment est une transmission PUSCH ou PUCCH ou SRS dans une transmission de liaison montante dans le premier intervalle de temps, déterminer que le deuxième type de PHR est le PHR réel ; sinon, déterminer que le deuxième type de PHR est le PHR virtuel.

9. Dispositif terminal (300), comprenant :
un module de rapport (301), configuré pour exécuter un rapport de marge de puissance d'un type de PHR cible selon une politique de rapport de marge de puissance, PHR, dans lequel
la politique de PHR est liée au type de PHR cible, le type de PHR cible comprend un premier type de PHR et/ou un deuxième type de PHR, le premier type de PHR comprend un PHR de type 1, un PHR de type 2 ou un PHR de type 3, et le deuxième type de PHR comprend un PHR réel ou un PHR virtuel ;
dans lequel la politique de PHR comprend : déterminer le type de PHR cible sur la base d'une transmission de liaison montante entre un premier moment et un second moment, dans lequel le premier moment est un moment auquel le dispositif terminal déclenche le rapport de marge de puissance, et le second moment est un moment de rapport de marge de puissance ;
dans lequel la détermination du type de PHR cible sur la base d'une transmission de liaison montante entre un premier moment et un second moment comprend au moins l'une des opérations suivantes :
lorsqu'au moins une transmission PUSCH existe entre le premier moment et le second moment, déterminer que le type de PHR cible est le premier type de PHR, dans lequel le premier type de PHR est le PHR de type 1 ; ou,
lorsqu'au moins une transmission SRS existe entre le premier moment et le second moment, déterminer que le type de PHR cible est le premier type de PHR, dans lequel le premier type de PHR est le PHR de type 3.

10. Dispositif terminal (300) selon la revendication 9, dans lequel le type de PHR cible comprend le premier type de PHR ; et
la politique de PHR comprend en outre l'une quelconque des opérations suivantes :
lorsqu'au moins une transmission PUCCH existe entre le premier moment et le second moment, déterminer que le premier type de PHR est le PHR de type 2 ;
lorsqu'il n'existe que la transmission PUCCH dans la transmission de liaison montante entre le premier moment et le second moment, déterminer que le premier type de PHR est le PHR de type 1 ou le PHR de type 3 ;
lorsque la dernière transmission de liaison montante à partir du second moment est une transmission PUCCH dans la transmission de liaison montante entre le premier moment et le second moment, déterminer que le premier type de PHR est le PHR de type 1 ou le PHR de type 3 ; et
lorsque la dernière transmission de liaison montante à partir du second moment est une transmission PUCCH dans la transmission de liaison montante entre le premier moment et le second moment, déterminer que le premier type de PHR est le PHR de type 2.

11. Dispositif terminal (300) selon la revendication 10, dans lequel la politique de PHR comprend en outre au moins l'une des opérations suivantes :
lorsque la dernière transmission de liaison montante à partir du second moment est une transmission PUSCH dans la transmission de liaison montante entre le premier moment et le second moment, déterminer que le premier type de PHR est le PHR de type 1 ;
lorsque la dernière transmission de liaison montante à partir du second moment est une transmission SRS dans la transmission de liaison montante entre le premier moment et le second moment, déterminer que le premier type de PHR est le PHR de type 3.

12. Dispositif terminal (300) selon la revendication 9, dans lequel le type de PHR cible comprend le deuxième type de PHR ; et
la politique de PHR comprend en outre l'une quelconque des opérations suivantes :
lorsqu'aucune transmission PUSCH ou PUCCH ou SRS n'existe dans un premier intervalle de temps, déterminer que le deuxième type de PHR est le PHR virtuel ;
lorsqu'il n'existe que la transmission PUCCH dans le premier intervalle de temps, déterminer que le deuxième type de PHR est le PHR virtuel ; et
lorsque la dernière transmission de liaison montante à partir du second moment est une transmission PUCCH dans la transmission de liaison montante entre le premier moment et le second moment, déterminer que le deuxième type de PHR est le PHR virtuel, dans lequel le premier intervalle de temps est [T1, T2], T1 est le premier moment et T2 est le second moment.

13. Dispositif terminal selon la revendication 9, dans lequel la politique de PHR comprend en outre :
déterminer une première porteuse utilisée pour le calcul de la marge de puissance, dans lequel
la première porteuse appartient à au moins deux porteuses qui transportent une première transmission de liaison montante du dispositif terminal, la première porteuse est une porteuse qui a la priorité la plus élevée dans les au moins deux porteuses et qui est déterminée sur la base d'une relation de priorité de porteuse, et la première transmission de liaison montante comprend la transmission d'un canal physique de liaison montante ou d'un signal de référence.

14. Dispositif terminal (300) selon la revendication 13, dans lequel la relation de priorité de porteuse comprend au moins l'un des éléments suivants :
une priorité d'une porteuse cible est supérieure à une priorité d'une porteuse source ;
une priorité d'une porteuse primaire est supérieure à une priorité d'une porteuse primaire-secondaire, et la priorité de la porteuse primaire-secondaire est supérieure à une priorité d'une porteuse secondaire ;
une priorité d'une porteuse qui transporte un canal physique d'accès aléatoire, PRACH, est supérieure à une priorité d'une porteuse qui ne transporte pas un PRACH ;
une priorité d'une porteuse qui transporte un canal physique de commande de liaison montante, PUCCH, est supérieure à une priorité d'une porteuse qui ne transporte pas un PUCCH ;
une priorité d'une porteuse qui transporte un signal de référence de sondage, SRS, apériodique est supérieure à une priorité d'une porteuse qui transporte un canal physique partagé de liaison montante, PUSCH, et la priorité de la porteuse qui transporte le PUSCH est supérieure à une priorité d'une porteuse qui transporte un SRS périodique ou semi-persistant ; et
une priorité d'une porteuse brouillée par un canal physique partagé de liaison montante, PUSCH, en utilisant un identifiant temporaire de réseau radio, RNTI, de premier type est supérieure à une porteuse brouillée par le PUSCH en utilisant un RNTI de deuxième type, dans lequel le RNTI de premier type est un identifiant temporaire de réseau radio de cellule de schéma de modulation et de codage, MCS-C-RNTI, et le RNTI de deuxième type est un RNTI autre que le MCS-C-RNTI.

15. Dispositif terminal (300) selon la revendication 9, dans lequel la politique de PHR comprend en outre :
déterminer le type de PHR cible sur la base d'une seconde transmission de liaison montante, dans lequel
la seconde transmission de liaison montante est la dernière transmission de liaison montante à partir du second moment dans la transmission de liaison montante entre le premier moment et le second moment.
